# EUROPÄISCHE PATENTSCHRIFT

(11) **EP 1 578 831 B1**
(45) Veröffentlichungstag und Bekanntmachung des Hinweises auf die Patenterteilung: **18.01.2012**
(21) Anmeldenummer: 03767761.4
(22) Anmeldetag: 06.12.2003
(51) Int. Cl.: C08G 18/42, C08G 18/32, C08G 18/79, C09D 175/04, C08G 18/80

(54) **ABSPALTERFREIE PULVERLACKVERNETZER**
SEPARATOR-FREE POWDER PAINT CROSSLINKING AGENTS
AGENTS RETICULANTS DE LAQUE EN POUDRE EXEMPTS DE SEPARATEURS

(30) Priorität: 20.12.2002 DE 10260300
(43) Veröffentlichungstag der Anmeldung: 28.09.2005
(73) Patentinhaber: Bayer MaterialScience AG, 51368 Leverkusen (DE)
(72) Erfinder: GRESZTA-FRANZ, Dorota, 40699 Erkrath (DE); GÜRTLER, Christoph, 50676 Köln (DE); HALPAAP, Reinhard, 51519 Odenthal (DE); SCHELHAAS, Michael, 50733 Köln (DE); GRAHL, Michael, 51371 Leverkusen (DE)
(86) Internationale Anmeldenummer: PCT/EP2003/013822
(87) Internationale Veröffentlichungsnummer: WO 2004/058845

(56) Entgegenhaltungen:
- WO-A-03/004545
- DE-A- 2 105 777
- DE-B- 1 263 956
- US-A- 5 310 577

## Beschreibung

Die vorliegende Erfindung betrifft neue blockierte abspalterfreie Polyurethan (PUR)-Vernetzer, ein Verfahren ihrer Herstellung und deren Verwendung als Ausgangskomponente bei der Herstellung von Polyurethankunststoffen, insbesondere als Vernetzer für Hitze-vernetzbare Pulverlacke.

PUR-Pulverlacke, deren Entwicklung in den 70er Jahren einen erheblichen Aufschwung genommen hat, bestehen zumeist aus organischen Polyhydroxylverbindungen und blockierten Polyisocyanaten (vgl. z.B. DE-A 2 105 777, EP-A 23 023). Die bei Raumtemperatur festen Bindemittel stellen wertvolle Beschichtungen-Systeme dar, die nahezu die Verlaufseigenschaften von flüssigen PUR Lacken erreichen und in den übrigen Eigenschaften gleichwertig sind. Der Nachteil dieser Systeme besteht darin, dass bei der thermischen Vernetzung die Blockierungsmittel zumindest anteilig freigesetzt werden und sowohl zu Umweltbelastung (VOC) als auch störenden Ablagerungen in Einbrennöfen führen.

Dieser Nachteil wurde mit der Entwicklung Blockierungsmittel-freier, Uretdionbasierter Pulverlackvemetzer beseitigt. Die Herstellung und Verwendung von Uretdion-haltigen Pulverlackvernetzern ist beschrieben in z.B. DE-A 2 420 475 oder EP-A 45 998. Bei diesen Vernetzern erfolgt die Aushärtung über eine thermische Rückspaltung des Uretdions in freie Isocyanatgruppen und deren anschließende Reaktion mit einem hydroxyfunktionellen Bindemittel, wobei Einbrenntemperaturen oberhalb 180°C erforderlich sind. Deshalb waren Uretdion-Vernetzer lange Zeit nur für Hitze-beständige Substrate einsetzbar. Darüberhinaus war ihre Verwendung auch aus ökonomischen Gründen (hohe Energiekosten aufgrund der hohen erforderlichen Einbrenntemperaturen) nicht günstig.

In letzter Zeit wurden auch katalysierte Uretdion-Systeme veröffentlicht, die Vernetzung bei niedrigeren Temperaturen ermöglichen. In EP-A 803 524 wurde 1,5-Diazabicyclo[4.3.0]non-5-en (DBN) als Katalysator für die Uretdion-Vemetzung bei 150°C beschrieben. Dieser Katalysator führt in praxis-üblichen Pulverlacken allerdings zu starker Vergilbung. Nach der Lehre der WO 00/34355 erreichen Uretdionpulverlacke in Gegenwart von Zinkacetylacetonat als Katalysator schon nach 30 Minuten bei 130°C eine ausreichende Vernetzung, jedoch nur unter Zusatz von einem weiteren Pulverlackvernetzer, wie z.B. Triglycidylisocyanaurat (TGIC).

Abspalterfrei reagierende Pulverlackvemetzer werden z.B. in der DE-A 2 144 643 und DE-A 2 328 013 beschrieben. Es handelt sich hierbei um Systeme auf der Basis von 2,2'-(1,4-Phenylen)bis(2-oxazolin), das durch Umsetzung von aromatischen Dicarbonsäuren mit Ethanolamin zu Oxazolinen erhalten werden kann. Durch den nucleophilen Angriff mit Polyolen wird aus dieser Struktur ein Polyester Polyamid erhalten. Der große Nachteil dieses Systems ist darin zu sehen, dass derartige Lacksysteme beim Überbrennen sehr stark vergilben und somit für höherwertige Anwendungen nicht verwendbar sind.

Pulverlackvemetzer auf Basis blockierter Polyisocyanate, die niedrigere Vernetzungstemperaturen aufweisen und ohne Abspaltung des Blockierungsmittels und zu optisch einwandfreien Beschichtungen ausgehärtet werden können, sind hingegen bisher nicht bekannt.

Es wurde nun gefunden, dass sich durch Umsetzung von Polyisocyanaten mit CH-aziden cyclischen Ketonen und gegebenenfalls weiteren gegenüber Isocyanatgruppen reaktiven Verbindungen feste blockierte Polyisocyanate herstellen lassen, die in Kombination mit üblichen Pulverlackbindemitteln erstmals die formulierung von Pulverlacken ermöglichen, die abspalterfrei bei niedrigen Einbrenntemperaturen ≤ 160°C aushärten und nicht zu Überbrennvergilbung neigen.

Gegenstand der Erfindung sind organische Polyisocyanate, die
a) einen Schmelzbereich innerhalb des Temperaturbereiches von 40°C. bis 125°C aufweisen und
b) mit einem oder mehreren CH-aziden cyclischen Ketonen der allgemeinen
   Formel (I) blockierte NCO-Gruppen aufweisen, 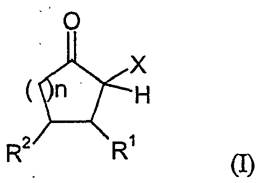 wobei n Formel (I)
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Hetero-atome der Elemente Sauerstoff, Schwefel, Stickstoff enthalten und gegebenenfalls durch Halogenatome substituiert sein können und
   - n: eine ganze Zahl von 0 bis 5 ist.

Ein weiterer Gegenstand der Erfindung ist ein Verfahren zur Herstellung der erfindungsgemäßen organischen Polyisocyanate, bei dem man
A) eine organische Polyisocyanat-Komponente einer mittleren Isocyanatfunktionalität ≥ 1,8,
B) ein oder mehrere CH-azide cyclische Ketone der allgemeinen Formel (I), 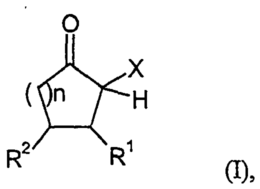 in welcher
   - X: eine elektronenziehende Gruppe ist,
   - R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Hetero-atome der Elemente Sauerstoff, Schwefel, Stickstoff enthalten und gegebenenfalls durch Halogenatome substituiert sein können und
   - n: eine ganze Zahl von 0 bis 5 ist, und
C) gegebenenfalls eine oder mehrere weitere gegenüber Isocyanatgruppen reaktive Verbindungen
D) ggf. in Gegenwart eines oder mehrerer Katalysatoren
in solchen Mengenverhältnissen miteinander umsetzt, dass das Äquivalentverhältnis von Isocyanatgruppen aus Komponente A) zur Summe der gegenüber Isocyanatgruppen reaktiven Gruppen der Komponente B) und ggf. C) 0,7 bis 1,3 entspricht.

Als organische Polyisocyanate in Komponente A) des erfindungsgemäßen Verfahrens können beliebige isocyanatfunktionelle Verbindungen mit einer mittleren NCO-Funktionalität ≥ 1,8 einzeln oder in beliebigen Mischungen untereinander eingesetzt werden.

Geeignet sind beispielsweise monomere Di- und Triisocyanate mit aliphatisch, cycloaliphatisch und/oder aromatisch gebundenen Isocyanatgruppen, die nach beliebigen Verfahren, z.B. durch Phosgenierung oder auf phosgenfreiem Weg, z.B. durch Urethanspaltung, hergestellt werden können, insbesondere solche des Molekulargewichtsbereiches 140 bis 400, wie z.B. 1,4-Butandiisocyanat, 1,6-Diisocyanatohexan (Hexamethylendiisocyanat, HDI), 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1-Isocyanato-3,3,5-trimethyl-5-isocyanatomethylcyclohexan (Isophorondiisocyanat, IPDI), 1-Isocyanato-1-methyl-4(3)-isocyanatomethylcyclohexan, 4,4'-Diisocyanatodicyclo-hexylmethan, 1,3-Diisocyanato-2(4)-methylcyclohexan, 4-Isocyanatomethyl-1,8-octandiisocyanat (Triisocyanatononan, TIN), 1,3- bzw. 1,4-Phenylendiisocyanat, 2,4- bzw. 2,6-Toluylendiisocanat (TDI), Diphenylnethan-2,4'- bzw. 4,4'-diisocyanat und Naphthylen-1,5-diisocyanat oder deren Gemische.

Ebenfalls als organische Polyisocyanate für das erfindungsgemäße Verfahren geeignet sind durch Modifizierung der genannten Di- und/oder Triisocyanate hergestellte Polyisocyanate mit Uretdion-, Isocyanurat-, Iminooxadiazintrion-, Urethan-, Allophanat-, Biuret- und/oder Oxadiazintrionstruktur, wie sie beispielsweise in J. Prakt. Chem. 336 (1994) 185 - 200 oder DE-A 1 670 666 und EP-A 798 299 beispielhaft beschrieben sind.

Ebenfalls geeignet als Polyisocyanate zum Einsatz in Komponente A) sind NCOfunktionelle Prepolymere mit einer mittleren NCO-Funktionalität von 2,0 bis 4,0 und einem aus Funktionalität und NCO-Gehalt berechenbaren mittleren Molekulargewicht (Mₙ) von 350 bis 5000, vorzugsweise von 400 bis 2000, ganz besonders bevorzugt 450 bis 1200, wie sie in bekannter Weise durch Umsetzung der oben genannten Diisocyanate, Triisocyanate und/oder Polyisocyanate mit stöchiometrisch unterschüssigen Mengen von Polyolen, insbesondere solchen des Molekulargewichtsbereiches 62 bis 2000, erhältlich sind.

Zur Herstellung der Prepolymere eignen sich prinzipiell alle in EP-A 1 063 251 offenbarten Polyole, insbesondere Polyesterpolyole.

Selbstverständlich können alle genannten Polyisocyanate und/oder NCO-Prepolymere einzeln oder in beliebigen Gemischen untereinander in das erfindungsgemäße Verfahren eingesetzt werden.

Zur Einstellung besonderer Eigenschaften, beispielsweise der Funktionalität oder der Schmelzviskosität, können gegebenenfalls auch Monoisocyanate in Komponente A) mitverwendet werden. Geeignete Monoisocyanate sind z.B. Butylisocyanat, n-Amylisocyanat, n-Hexylisocyanat, n-Heptylisocyanat, n-Octylisocyanat, Undecylisocyanat, Dodecylisocyanat, Tetradecylisocyanat, Cetylisocyanat, Stearylisocyanat, Cyclopentylisocyanat, Cyclohexylisocyanat, 3- bzw. 4-Methylcyclohexylisocyariat oder beliebige Gemische solcher Monoisocyanate.

Bei Mitverwendung von Monoisocyanaten kommen diese allerdings maximal in solchen Mengen zum Einsatz, daß die mittlere Isocyanat-Funktionalität der Komponente A) mindestens 1,8, bevorzugt 2,0 bis 6,0, besonders bevorzugt von 2,0 bis 4,5 beträgt.

Bevorzugte organische Polyisocyanate für das erfindungsgemäße Verfahren sind solche der vorstehend beschriebenen Art mit ausschließlich aliphatisch und/oder cycloaliphatisch gebundenen NCO-Gruppen, ggf. in Form ihrer genannten NCO-Prepolymere oder als Uretdion-, Isocyanurat-, Iminooxadiazintrion-, Urethan-, Allophanat-, Biuret- und/oder Oxadiazintriongruppen-haltige Polyisocyanate.

Ganz besonders ist die Verwendung von Hexamethylendiisocyanat (HDI), Isophorondiisocyanat (IPDI), 4,4'-Diisocyanatodicyclohexylmethan, deren ggf. Uretdion-, Isocyanurat-, Iminooxadiazintrion-, Urethan-, Allophanat-, Biuret- und/oder Oxadiazintriongruppen-haltige Polyisocyanate und/oder NCO-Prepolymere auf Basis dieser Diisocyanate.

Als erfindungsgemäß in Komponente B) einzusetzende CH-azide cyclische Ketone entsprechen der allgemeinen Formel (I), 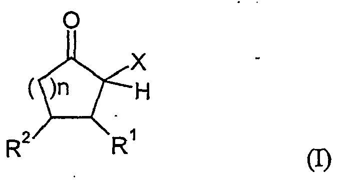 in welcher
- X: eine elektronenziehende Gruppe ist,
- R¹, R²: unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Heteroatome der Elemente Sauerstoff, Schwefel, Stickstoff enthalten und gegebenenfalls durch Halogen-atome substituiert sein können und
- n: eine ganze Zahl von 0 bis 5 ist.

Bei der elektronenziehenden Gruppe X kann es sich um beliebige Substituenten handeln, die durch induktive (z.B. -I-Effekt) und/oder mesomere Effekte (z.B. -M-Effekt) zu einer CH-Azidität des α-ständigen Wasserstoffes führen. Dies können beispielsweise Estergruppen, Sulfoxidgruppen, Sulfongruppen, Nitrogruppen, Phosphonatgruppen, Nitrilgruppen, Isonitrilgruppen oder Carbonylgruppen sein. Bevorzugte Substituenten X sind Nitril -und Estergruppen, besonders bevorzugt die Carbonsäuremethylester- und Carbonsäureethylestergruppen.

Bei den Resten R¹ und R² handelt es sich um Wasserstoff oder beliebige gesättigte oder ungesättigte aliphatische oder cycloaliphatische, gegebenenfalls substituierte aromatische oder araliphatische Reste, die bis zu 12 Kohlenstoffatome und gegebenenfalls bis zu 3 Heteroatome der Elemente Sauerstoff, Schwefel, Stickstoff enthalten und gegebenenfalls durch Halogenatome substituiert sein können. Dabei können die Reste R¹ und R² auch in Kombination untereinander zusammen mit den Kohlenstoffatomen des cyclischen Ketons und gegebenenfalls einem weiteren Stickstoffatom oder einem Sauerstoffatom anellierte Ringe mit 3 bis 6 Kohlenstoffatomen bilden.

Bevorzugt stehen die Reste R¹ und R² in den CH-aziden Ketonen der allgemeinen Formel (I) für Wasserstoff oder gesättigte aliphatische, oder cyloaliphatische Reste, die bis zu 6 Kohlenstoffatome und gegebenenfalls bis zu 3 Heteroatome der Elemente Sauerstoff, Schwefel, Stickstoff enthalten können. Ganz besonders bevorzugt haben die Reste R¹ und R² die Bedeutung von Wasserstoffatomen.

Geeignet, wenn auch weniger bevorzugt, sind auch Verbindungen der allgemeinen Formel (I), deren Ring gegebenenfalls Heteroatome, wie Sauerstoff-, Schwefel-, oder Stickstoffatome enthalten. Bevorzugt ist hierbei eine Lacton- oder Thiolactonstruktur.

Bevorzugt steht n in der allgemeinen Formel für eine ganze Zahl von 0 bis 5, insbesondere für 1 oder 2, so dass die cyclischen Ketone im Ring daher 5 oder 6 Kohlenstoffatome besitzten.

Beispiele für solche bevorzugten cyclischen Ketone sind Cyclopentanon-2-carboxymethyl- und ethylester, Cyclopentanon-2-carbonsäurenitril, Cyclohexanon-2-carboxymethyl- und ethylester oder Cyclopentanon-2-carbonylmethyl. Besonders bevorzugte cyclischen Ketone sind Cyclopentanon-2-carboxymethyl- und ethylester sowie Cyclohexanon-2-carboxymethyl- und ethylester.

Diese Cyclopentanonsysteme sind technisch leicht durch eine Dieckmann Kondensation von Adipinsäuredimethyl- bzw. Diethylester erhältlich. Cyclohexanon-2-carboxymethylester ist u.a. durch Hydrierung von Salicylsäuremethylester zugänglich.

Gegebenenfalls kommen beim erfindungsgemäßen Verfahren weitere gegenüber Isocyanatgruppen reaktive Verbindungen C) zum Einsatz. Hierbei handelt es sich insbesondere um Polyole mit einem zahlenmittleren Molekulargewicht (Mₙ) von 62 - 2000 g/mol und einer mittleren Funktionalität von bevorzugt mindestens 2,0.

Dies können beispielsweise einfache mehrwertige Alkohole des Molekulargewichtsbereiches 62 bis 400 sein, wie z.B. 1,2-Ethandiol, 1,2- und 1,3-Propandiol, die isomeren Butandiole, Pentandiole, Hexandiole, Heptandiole und Octandiole, 1,2- und 1,4-Cyclohexandiol, 1,4-Cyclohexandimethanol oder 4,4'-(1-Methylethyliden)-bis-cyclohexanol, 1,2,3-Propantriol, 1,1,1-Trimethylolethan, 1,2,6-Hexantriol, 1,1,1-Trimethylolpropan, 2,2-Bis(hydroxymethyl)-1,3-propandiol oder 1,3,5-Tris(2-hydroxyethyl)-isocyanurat aber auch um einfache Ester- oder Etheralkohole, wie z.B. Hydroxypivalinsäureneopentylglykolester, Diethylenglykol oder Dipropylenglykol.

Ebenfalls geeignet als weitere ggf. einzusetzende isocyanatreaktive Verbindungen sind Monoalkohole wie z.B. Ethanol, Propanol, Butanol und deren Isomere oder Diamine wie Laromin^{®} C 260 (BASF AG, Ludwigshafen, DE), PACM^{®} 20 (Air Products, USA), Dytek^{®} A (DuPont, USA). Geeignet sind weiterhin Aminoalkohole wie z.B. Aminoethanol, Alkylaminoethanol, Tetrakishydroxyethylenethylendiamin oder weitere Aminoalkohole auf der Basis aller bekannten Mono, Di- oder Triamine.

Ebenfalls geeignet als weitere unter C) ggf. einzusetzende isocyanatreaktive Verbindungen sind Hydroxycarbonsäuren, wie z.B. 2-Hydroxypropionsäure, Dimethyolpropionsäure, Dimethyolbuttersäure, 9,10-Dihydroxystearinsäure, 4-Hydroxybenzoesäure und deren Isomere oder niedermolekulare Umsetzungsprodukte aus 1 mol Trimellithsäureanhydrid mit 1 bis 2 Äquivalenten eines Diols mit 2 bis 15 C-Atomen. Auf diese Weise modifizierten Polyisocyanate sind besonders geeignet als Pulverlackvemetzer für abspalter-freie matte Beschichtungen der in DE-A 3 232 463 beschriebenen Art.

Ebenfalls geeignet als weitere unter C) ggf. einzusetzende isocyanatreaktive Verbindungen sind die an sich bekannten Polyhydroxylverbindungen vom Polyester-, Polycarbonat-, Polyestercarbonat- oder Polyethertyp.

Als Polyesterpolyole können beispielsweise solche eines mittleren, aus Funktionalität und Hydroxylzahl berechenbaren Molekulargewichtes (Mₙ) von 200 bis 2000, vorzugsweise von 250 bis 1500, mit einem Hydroxylgruppen-Gehalt von 1 bis 21 Gew.-%, vorzugsweise 2 bis 18 Gew.-%, wie sie sich in an sich bekannter Art und Weise durch Umsetzung von mehrwertigen Alkoholen, beispielsweise den oben genannten des Molekulargewichtsbereiches (Mₙ) 62 bis 400, mit unterschüssigen Mengen an mehrwertigen Carbonsäuren, entsprechenden Carbonsäureanhydriden, entsprechenden Polycarbonsäureestern von niederen Alkoholen oder Lactonen herstellen lassen.

Die zur Herstellung der Polyesterpolyole verwendeten Säuren oder Säurederivate können aliphatischer, cycloaliphatischer und/oder aromatischer Natur sein und gegebenenfalls, z.B. durch Halogenatome, substituiert und/oder ungesättigt sein. Beispiele geeigneter Säuren sind beispielsweise mehrwertige Carbonsäuren des Molekulargewichtsbereichs (Mₙ) 118 bis 300 oder deren Derivate wie beispielsweise Bernsteinsäure, Adipinsäure, Sebacinsäure, Phthalsäure, Isophthalsäure, Trimellithsäure, Phthalsäureanhydrid, Tetrahydrophthalsäure, Maleinsäure, Maleinsäureanhydrid, dimere und trimere Fettsäuren, Terephthalsäuredimethylester und Terephthalsäure-bis-glykolester.

Zur Herstellung der Polyesterpolyole können auch beliebige Gemische dieser beispielhaft genannten Ausgangsverbindungen eingesetzt werden.

Als Komponente C) bevorzugt einzusetzende Polyesterpolyole sind solche, wie sie sich in an sich bekannter Weise aus Lactonen und einfachen mehrwertigen Alkoholen, wie z.B. den oben beispielhaft genannten, als Startermolekülen unter Ringöffnung herstellen lassen. Geeignete Lactone zur Herstellung dieser Polyesterpolyole sind beispielsweise ß-Propiolacton, γ-Butyrolacton, γ- und δ-Valerolacton, ε-Caprolacton, 3,5,5- und 3,3,5-Trimethylcaprolacton oder beliebige Gemische solcher Lactone.

Ebenfalls geeignet sind Polyhydroxylverbindungen vom Polycarbonattyp, besonders die an sich bekannten Polycarbonatdiole, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 beispielhaft genannt sind, mit Diarylcarbonaten, wie z.B. Diphenylcarbonat, oder Phosgen herstellen lassen. Insbesondere geeignet sind die an sich nach z.B. DE-A 1 770 245 bekannten Estergruppen- und Carbonatgruppen aufweisende Diole, die durch Umsetzung zweiwertiger Alkohole mit Lactonen der oben beispielhaft genannten Art, insbesondere ε-Caprolacton und anschließende Reaktion der dabei entstehenden Polyesterdiole mit Diphenylcarbonat erhalten werden können.

Ebenfalls geeignet als weitere unter C) ggf. einzusetzende isocyanatreaktive Verbindungen sind Polyetherpolyole, insbesondere solche eines mittleren, aus Funktionalität und Hydroxylzahl berechenbaren Molekulargewichtes (Mₙ) von 200 bis 2000, vorzugsweise 250 bis 11500, mit einem Hydroxylgruppen-Gehalt von 1,7 bis 25 Gew.-%, vorzugsweise 2,2 bis 20 Gew.-%, wie sie in an sich bekannter Weise durch Alkoxylierung geeigneter Startermoleküle zugänglich sind. Zur Herstellung dieser Polyetherpolyole können beliebige mehrwertige Alkohole, wie die oben beschriebenen des Molekulargewichtsbereichs (Mₙ) 62 bis 400, als Startermoleküle eingesetzt werden. Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Geeignete Polyetherpolyole sind auch die an sich bekannten Polyoxytetramethylenglykole, wie sie beispielsweise gemäß Angew. Chem. 72, 927 (1960) durch Polymerisation von Tetrahydrofuran erhalten werden können.

Auch geeignet sind sogenannte Dimerdiole, wie sie in an sich bekannter Weise z.B. durch Hydrierung von dimeren Fettsäuren und/oder deren Estern gemäß der DE-A 1 768 313 oder anderen der in der EP-A 720 994 beschriebenen Verfahren hergestellt werden können.

Geeignete optional mitzuverwendende isocyanatreaktive Verbindungen C) sind schließlich auch die aus der Polyurethanchemie bekannten Blockierungsmittel mit gegenüber Isocyanatgruppen reaktiven Gruppen, wie z.B. Malonsäurediethylester, Acetessigester, Acetonoxim, Butarionoxim, ε-Caprolactam, 3,5-Dimethylpyrazol, - 1,2,4-Triazol, Dimethyl-1,2,4-triazol, Imidazol oder beliebige Gemische dieser, Blockierungsmittel. Die Mitverwendung dieser bekannten Blockierungsmittel erfolgt falls überhaupt in solchen Mengen, daß in den resultierenden mischblockierten Polyisocyanaten mindestens 30 mol-%, vorzugsweise mindestens 50 mol-%, besonders bevorzugt mindestens 70 mol-%, der blockiert vorliegenden Isocyanatgruppen mit den oben beschriebenen cyclischen Ketonen aus Schritt C) blockiert sind.

Bevorzugt für das erfmdungsgemäßen Verfahren als C) einzusetzende Verbindungen sind die obengenannten einfachen mehrwertigen Alkohole des Molekulargewichtsbereiches (Mₙ) 62 bis 400, die genannten Polyester- oder Polycarbonatpolyole sowie beliebige Gemische dieser Polyolkomponenten.

Die optional als C) mitzuverwendenden isocyanatreaktiven Verbindungen werden in Mengen von 0 bis 70 Gew.%, vorzugsweise 0 bis 50 Gew.%, bezogen auf das Gesamtgewicht der Komponenten A, B und C eingesetzt.

Beim erfindungsgemäßen Verfahren werden die Reaktanden A), B und ggf. C) in solchen Mengenverhältnissen miteinander umgesetzt, dass das Äquivalentverhältnis von Isocyanatgruppen (aus A)) zur Summe der gegenüber Isocyanatgruppen reaktiven Gruppen (aus B) und ggf. C)) 0,7 bis 1,3, bevorzugt 0,8 bis 1,2, insbesondere 0,9 bis 1,1 beträgt.

Prinzipiell können dabei die Komponenten B) und ggf. C) gleichzeitig aber auch in beliebiger Reihenfolge nacheinander mit den organischen Polyisocyanaten A) zur Reaktion gebracht werden.

Die Umsetzung der Komponenten A), B) und ggf. C) erfolgt beim erfindungsgemäßen Verfahren bevorzugt in Gegenwart eines oder mehrerer Katalysatoren D), wobei alle dem Fachmann bekannten Verbindung zur Katalyse der Reaktion von Isocyanatgruppen mit isocyanatreaktiven Gruppierungen einzeln oder in beliebigen Mischungen untereinander verwendet werden können.

Bevorzugt werden als Katalysator alle dem Fachmann für die Beschleunigung einer NCO-Blockierung bekannten Katalysatoren wie z.B. Alkali- und Erdalkalimetallbasen, wie gepulvertes Natriumcarbonat (Soda) oder Trinatriumphosphat, Carbonate oder Carboxylate der Metalle der zweiten Nebengruppe, wie Zink-2-ethylhexanoat, oder auch Amine wie 1,4-Diazabicyclo[2.2.2]octan (DABCO) verwendet, insbesondere Natriumcarbonat, Kaliumcarbonat oder Zink-2-ethylhexanoat.

Werden optional eine oder mehrere weitere isocyanatreaktive Verbindungen C) mitverwendet, so können zusätzlich weitere ansich in Polyurethan-Chemie bekannte von vorgenannten ggf. verschiedene Katalysatoren D) zur Steigerung der Isocyanatreaktivität zugesetzt werden, wie z.B. tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, Dibutylzinn(IV)-dilaurat und Molybdänglykolat oder beliebige Gemische solcher Katalysatoren.

Besonders bevorzugt ist die Verwendung nur eines Katalysators D), insbesondere Zink-2-ethylhexanoat.

Beide vorstehend genannten Katalysatortypen werden jeweils in Mengen von 0,05 bis 10 Gew.-%, bevorzugt 0,1 bis 3 Gew.-%, bezogen auf die Gesamtmenge der Ausgangskomponenten A), B) und gegebenenfalls C) zugesetzt.

Die Herstellung der erfindungsgemäßen Polyisocyanate wird bei Temperaturen von 0°C bis 180°C, bevorzugt 20°C bis 180°C, insbesondere von 40 bits 140°C durchgeführt. In einer ganz besonders bevorzugten Ausführungsform der Erfindung wird die Temperatur von 40°C bis 140°C so gewählt, dass die Reaktanden A), B) und ggf. C) als homogene Schmelze vorliegen.

Die Umsetzung kann, wenn auch weniger bevorzugt, in Gegenwart üblicher, gegenüber Isocyanaten inerten Lösungsmittel wie Methylenchlorid, Butylacetat, Ethylenglykolmonomethyl- oder -ethyletheracetat, 1-Methoxypropyl-2-acetat, 2-Butanon, 4-Metbyl-2-pentanon, Cyclohexanon, Propylenglykoldiacetat, Diethylenglykoldimethylether, Diethylenglykolethyl-, -butyletheracetat, N-Methylpyrrolidon und N-Methylcaprolactam, Toluol oder Solvesso^{®} 100 der ExxonMobil Chemical, USA, sowie deren Gemischen untereinander erfolgen.

Wird die Herstellung in Lösung durchgeführt, beträgt typischerweise der eingestellte Festkörpergehalt der gelösten Reaktanden des Verfahrens 10 bis 90 Gew.-%.

Die gegebenenfalls mitverwendeten Lösungsmittel werden nach erfolgter Umsetzung der Reaktanden A), B), ggf. C) und ggf. D) mit Hilfe geeigneter Methoden abgetrennt. Die geeigneten Methoden sind beispielweise Vakuumtrocknung, Sprühtrocknung oder Ausdampf-Extrusion.

Die Herstellung der erfindungsgemäßen Polysocyanate kann sowohl kontinuerlich in einem statischen Mischer, einem Intensiv-Mischer oder in einem Extruder, bevorzugt aber diskontinuierlich in einem Batch-Reaktor durchgeführt werden.

Unabhängig vom der Art der Herstellung erhält man als erfindungsgemäße Produkte blockierte Polyisocyanate, die einen Schmelzbereich innerhalb des Temperaturbereiches einschließlich der Grenzen von 40°C bis 125°C, bevorzugt 40 bis 110°C, insbesondere 50 bis 100°C aufweisen. Bevorzugt weisen die erfindungsgemäßen Verfahrensprodukte zusätzlich eine nach der Differenz-Thermoanalyse (DTA) bestimmte Glasübergangstemperatur T_{g} von 30 bis 80°C, bevorzugt 40 bis 70°C auf.

Die erfindungsgemäßen blockierten Polyisocyanate stellen wertvolle Ausgangsmaterialien zur Herstellung von Polyurethankanststoffen dar. Sie finden insbesondere Verwendung als Vernetzerkomponente in hitzehärtbaren abspalterfreien PUR-Pulverlacken.

Geeignete Reaktionspartner für die erfindungsgemäßen Polyadditionsverbindungen sind dabei grundsätzlich sämtliche aus der Pulverlack-Technologie bekannten Bindemittel mit gegenüber Isocyanaten reaktionsfähigen Gruppen, wie z.B. Hydroxyl-, Carboxyl-, Amino-, Thiol-, Urethan- oder Harnstoffgruppen. Bevorzugt kommen jedoch Pulverlackbindemittel zum Einsatz, die unterhalb 40°C fest und oberhalb 130°C flüssig sind. Derartige Pulverlackbindemittel sind beispielsweise hydroxyfunktionelle Polyester, Polyacrylate oder Polyurethane, wie sie in den obengenannten Veröffentlichungen des Standes der Technik, z.B. in EP-A 45 998, oder in EP-A 254 152 beschrieben sind, aber auch beliebige Mischungen solcher Harze.

Zur Herstellung eines gebrauchsfertigen Pulverlacks werden die erfindungsgemäßen abspalterfreien blockierten Polyisocyanate mit geeigneten Pulverlackbindemitteln gemischt, gegebenenfalls mit weiteren Hilfs- und Zusatzmitteln, wie z.B. Katalysatoren, Pigmenten, Füllstoffen oder Verlaufsmitteln versetzt, und beispielsweise in Extrudern oder Knetern oberhalb des Schmelzbereichs der Einzelkomponenten, beispielsweise 70 bis 130°C, vorzugsweise 70 bis 110°C, zu einem homogenen Material vereinigt.

Die erfindungsgemäßen blockierten Polyisocyanate und die hydroxyfunktionellen Bindemittel kommen hierbei in solchen Mengenverhältnissen zum Einsatz, dass auf jede Hydroxylgruppe 0,6 bis 1,4, vorzugsweise 0,8 bis 1,2 blockierte Isocyanatgruppen entfallen.

Zur Beschleunigung der Aushärtung können Katalysatoren eingesetzt werden, die schon oben beim erfindungsgemäßen Verfahren zur Herstellung der blockierten Polyisocyanate beschrieben sind, wie z.B. DBTL (Dibutylzinndilaurat), Zink-2-ethylhexanoat und Bismut-2-ethylhexanoat. Bevorzugte Katalysatoren sind Zink-2-ethylhexanoat und Bismut-2-ethylhexanoat. Diese Katalysatoren kommen gegebenenfalls in Mengen von 0,001 bis 2,0 Gew. %, bevorzugt von 0,01 bis 0,5 Gew. %, bezogen auf die Gesamtmenge des gebrauchsfertigen Pulverlacks zum Einsatz. Auch andere aus der Polyurethanchemie bekannten Verbindungen, wie z.B. 1,5-Diaza-bicyclo[4.3.0]non-5-en (DBN), 1,8-Diazabicyao[5.4.0]undec-7-en (DBU) und 1,2-Dimethyl-tetrahydropyrimidin, oder tert. Amine wie Triethylamin, Pyridin, Methylpyridin, Benzyldimethylamin, N,N-Endoethylenpiperazin, N-Methylpiperidin, Pentamethyldiethylentriamin, N,N-Dimethylaminocyclohexan, N,N'-Dimethylpiperazin oder Metallsalze wie Eisen(III)-chlorid, Zinkchlorid, Zink-2-ethylcaproat, Zinn(II)-octoat, Zinn(II)-ethylcaproat, Zinn(II)-palmitat, und Molybdänglykolat in Mengen von 0,001 bis 2,0 Gew. %, bevorzugt von 0,01 bis 1,0 Gew. %, bezogen auf die Gesamtmenge des gebrauchsfertigen Pulverlacks zugesetzt werden.

Der nach Abkühlen der Schmelze resultierende Feststoff wird anschließend gemahlen und durch Sieben von den Kornanteilen oberhalb der gewünschten Korngröße, beispielsweise oberhalb 0,1 mm, befreit.

Der so hergestellte sprühfertige Pulverlack kann nach üblichen Pulverauftragsverfahren, wie z.B. elektrostatischem Pulverversprühen oder Wirbelsintern, auf die zu überziehenden Substrate aufgebracht werden. Erfindungsgemäß können beliebige Substrate, beispielsweise aus Metallen, Holz oder Glas, beschichtet werden.

Die Härtung der Überzüge erfolgt durch Erhitzen auf Temperaturen von 110 bis 220°C, vorzugsweise 130 bis 180°C, besonders bevorzugt 140 bis 160°C, während eines Zeitraums von 1 bis 60 min. bevorzugt 10 bis 30 Minuten.

Man erhält harte und elastische Beschichtungen mit guter Lösemittel- und Chemikalienbeständigkeit, die sich durch einen guten Verlauf und hohen Glanz auszeichnen.

### Beispiele

Die Ermittlung des NCO-Gehaltes erfolgte durch Titration gemäß DIN 53 185.

Die Glasübergangstemperatur T_{g} wurde mit einem Differential Scanning Kalorimeter (Typ DSC 12E, Metler-Toledo GmbH, D-35353 Giessen) in einem Temperaturintervall von -15°C bis + 100°C (Aufheizrate 10K/Minute) bestimmt.

Die angegebenen Schmelzbereiche in °C wurden mit einem Kapillar-Schmelzpunkt-Messgerät (Typ Büchi 530, Büchi Labortechnik AG, CH-9230 Flawil) bestimmt.

Als Katalysator wurden Zn(2-ethylhexanoat)₂ (Octasoligen^{®} Zink der Borchers GmbH, D-40765 Monheim) verwendet.

Die Bestimmung des Restmonomergehaltes wurde mittels Gaschromatograph (Typ HP 5890 Series II, Hewlett Packard, USA) bestimmt.

Unter der Angabe Raumtemperatur werden 23 ± 3°C verstanden.

Alle Prozentangaben sind, soweit nicht anders vermerkt, als Gewichtsprozent (Gew.-%) zu verstehen.

IPDI-Uretdion wurde nach US-A 4 912 210 durch Dimethylaminopyridin katalysierte Dimerisierung von IPDI hergestellt; NCO-Gehalt = 16,2 %; monomeres IPDI < 0,5 %

TMP: Trimethylolpropan

### Beispiel 1

### In-Lösung-Herstellung eines auf IPDI-Uretdion-basierten Pulverlackvemetzers

139,5 g IPDI-Uretdion (NCO-Gehalt: 16,2 %, monomeres IPDI < 0,5 %) wurden in 52 g Methylenchlorid unter Stickstoff bei Raumtemperatur gelöst. Zu der homogenen Lösung wurden 63,5 g Cyclopentanon-2-carboxylethylester und 6 g Trimethylolpropan (TMP) zugegeben. Die Mischung wurde 30 min gerührt. Schliesslich wurden 0,4 g Katalysator zugegeben, wobei die Temperatur leicht anstieg. Nachdem die Temperatur nicht weiter anstieg wurde die Reaktionsmischung auf 40°C aufgeheizt und so lange bei dieser Temperatur gerührt, bis der NCO-Gehalt unter 0,8 % fiel. Nach Vervollständigung der Reaktion wurde das Lösungsmittel bei 50°C unter Vakuum (1 mbar) entfernt.

Es wurde ein farbloses Pulver mit einem freien NCO-Gehalt von 0,5 % , einer T_{g} von 52°C und einem Schmelzbereich von 74°C bis 80°C erhalten.

### Beispiel 2

### In-Schmelze-Herstellung eines auf IPDI-Uretdion-basierten Pulverlackvernetzers

171,0 g IPDI-Uretdion und 0,5 g Katalysator wurden in einem Planschliffreaktor unter Stickstoff auf 80°C aufgeheizt. Unter kräftigen Rühren wurde zu der Schmelze eine Lösung aus 78,0 g Cyclopentanon-2-carboxylethylester und 7,1 g TMP so zugetropft, dass die Temperatur der Reaktionsmischung zwischen 100°C und 120°C war. Nach Ende der Zugabe wurde die Mischung bei 120°C solange gerührt bis der NCO-Gehalt kleiner 1,5 % war. Danach wurde die Schmelze zum Erstarren auf ein Blech ausgegossen. Nach Erkalten wurde ein schwach gelbes Festharz mit einem Gehalt an freien NCO-Gruppen von 1,2 % und einer T_{g} von 41°C erhalten.

### Beispiel 3

### Herstellung eines auf IPDI-Trimer-basierten Pulverlackvernetzers

174,1g Desmodur^{®} Z 4470 BA (IPDI-Trimer; 70 % in Butylacetat; NCO-Gehalt: 11,7 %; monomeres IPDI < 0,5 %, Bayer AG, DE) und 75,7g Cyclopentanon-2-carboxylethylester wurden bei Raumtemperatur unter Stickstoff zusammen vorgelegt und kurz gerührt bis eine homogene Lösung entstand. Danach wurde 0,5 g Katalysator zugegeben. Nach Abklingen der Exothermie wurde die Reaktionsmischung auf 40 aufgeheizt und bei dieser Temperatur unter Rühren gehalten, bis der NCO-Gehalt kleiner 0,5 % war. Anschließend wurde das Lösungsmittel bei 50°C unter Vakuum (lmbar)] entfernt.

Es wurde ein farbloses Pulver mit einem Gehalt an freien NCO-Gruppen von 0,5 %, einer T_{g} von 60°C und einem Schmelzbereich von 70°C bis 100°C erhalten.

### Beispiel 4

### Herstellung eines auf monomeren IPDI-basierten Pulverlackvernetzers

86,2 g Desmodur^{®} I (monomeres IPDI, NCO-Gehalt: 37,5 %, Bayer AG, DE), 10,4 g TMP und 78 g Methylenchlorid wurden bei 40°C unter Stickstoff zusammen vorgelegt und vermischt. Danach wurde 0,36 g Katalysator zugegeben. Anschließend wurde zu der Reaktionsmischung 84,7 g Cyclopentanon-2-carboxylethylester zugetropft. Nach Ende der Zugabe wurde die Reaktionsmischung bei 40°C so lange gerührt, bis der NCO-Gehalt kleiner 0,5 % war. Nach der Vervollständigung der Reaktion wurde das Lösungsmittel bei 50°C unter Vakuum (1 mbar) entfernt.

Es wurde ein farbloses Pulver mit einem Gehalt an freien NCO-Gruppen von 0 %, einer T_{g} von 41°C und einem Schmelzbereich von 60°C bis 70°C erhalten.

### Beispiel 5

### Herstellung eines Pulverlackvernetzers durch Ketten-Verlängerung eines teilblockierten Isocyanats

111g Desmodur^{®} I (monomeres IPDI, NCO-Gehalt: 37,5 %, Bayer AG, DE), 78,1 g Cyclopentanon-2-carboxylethylester und 0,4 g Katalysator wurden zusammen unter Stickstoff bei Raumtemperatur gerührt, bis der NCO-Gehalt den theoretischen Wert von 11 % erreichte. 37,8 g des so erhaltenen teilblockierten Isocyanats wurden dann in 46,8 g Butylacetat gelöst und auf 80°C aufgeheizt. Dazu wurden 8,9 g TMP portionsweise zugegeben und 3 Stunden bei 80°C gerührt bis der NCO-Gehalt kleiner 0,5 % war. Nach der Vervollständigung der Kettenverlängerung wurde das Lösungsmittel bei 60°C unter Vakuum (1mbar) entfernt.

Es wurde ein farbloses Pulver mit einem Gehalt an freien NCO-Gruppen von 0 % und einer T_{g} von 36°C erhalten.

### Beispiel 6:

### In-Schmelze-Herstellung eines auf IPDI-Uretdion-basierten Pulverlackvernetzers

173,0 g IPDI-Uretdion und 0,5 g Katalysator wurden in einem Planschliffreaktor unter Stickstoff auf 80°C aufgeheizt. Unter kräftigen Rühren wurde zu der Schmelze eine Lösung aus 71,0 g Cyclopentanon-2-carboxylethylester und 11,5 g 1,6-Hexandiol so zugetropft, dass die Temperatur der Reaktionsmischung zwischen 100°C und 120°C war. Nach Ende der Zugabe wurde die Mischung bei 110°C weitere 4 Stunden gerührt. Dann wurde die Schmelze zum Erstarren auf ein Blech ausgegossen. Nach dem Erkalten wurde ein ein schwach gelbes Festharz mit einem Gehalt an freien NCO-Gruppen von 2,5 % und einer T_{g} von 33°C erhalten.

### Beispiel 7

### Synthese eines Polycaprolacton-Diols

901 g 1,4-Butandiol und 1712 g ε-Caprolacton wurden bei Raumtemperatur unter trockenem Stickstoff vermischt, mit 0,3 g Katalysator versetzt und anschließend für 5 h auf 160 °C erhitzt. Nach Abkühlen auf Raumtemperatur wurde ein farbloses flüssiges Produkt mit einer Viskosität von 180 mPas (23 °C) und einem OH-Zahl von 416 mg KOH/g erhalten.

### Herstellung eines auf IPDI-Uretdion und Polycaprolacton-Diol basierten Pulverlackvernetzers

170,0 g IPDI-Uretdion, 40,0 g Polycaprolacton-Diol, 50,0 g Cyclopentanon-2-carboxylethylester und 112,0 g Methylenchlorid wurden bei 40°C unter Stickstoff vorgemischt. Zu der homogenen Mischung wurden 0,5 g Katalysator zugegeben. Die Reaktionsmischung wurde dann bei 40°C 12 Stunden nachgerührt. Schließlich wurde das Lösungsmittel bei 50°C unter Vakuum (1mbar) entfernt. Es wurde ein farbloses Pulver mit einem Gehalt an freien NCO-Gruppen von 0 %, einer T_{g} von 59°C und einem Schmelzbereich von 68°C bis 94°C erhalten.

### Beispiel 8

### In-Schmelze- Herstellung eines auf Desmodur^{®} W-basierten Pulverlackvernetzers

144,0 g Desmodur^{®} W (4,4'-Methylen-bis(cyclohexylisocyanat), NCO-Gehalt: 31,8 %, Bayer AG, DE) und 0,25 g Katalysator wurden in einem Planschliffreaktor unter Stickstoff auf 80°C aufgeheizt. Unter kräftigen Rühren wurde zu der Schmelze eine Lösung aus 86,0 g Cyclopentanon-2-carboxylethylester und 24,0 g TMP so zugegeben, dass die Temperatur der Reaktionsmischung zwischen 100°C und 120°C war. Nach Ende der Zugabe wurde die Mischung bei 120°C weitere 6 Stunden gerührt. Dann wurde die Schmelze auf ein Blech zum Erstarren ausgegossen. Nach Erkalten wurde ein schwach gelbes Festharz mit einem Gehalt an freien NCO-Gruppen von 1,8 %, einer T_{g} von 33°C und einem Schmelzbereich von 53°C bis 73°C erhalten.

### Beispiel 9

Der Dimerisierungskatalysator, Trihexyltetradecylphosphonium-1,2,4-triazolat, wurde nach literaturbekannten Methoden (z.B. DE 101 234 16) aus NatriumMethanolat und Trihexyltetradecylphosphoniumchlorid (Cyphos^{®} 3653, Cytec Industries, DE) hergestellt.

### Dimerisierung von Desmodur^{®} W

Zu 1000 g Desmodur^{®} W wurden 12 g des Dimerisierungskatalysators Trihexyltetradecylphosphonium-1,2,4-triazolat kontinuierlich unter Stickstoff, bei 30°C und über eine Reaktionszeit von 3 Stunden zugetropft. Nach einer Nachrührzeit von 30 min betrug der NCO-Gehalt in der Reaktionsmischung 26,2 %, entsprechend einem Oligomerisierungsgrad von 17,1 %. Der Katalysator wurde nun durch Zugabe von 4,6 g Dibutylphosphat deaktiviert und das resultierende klare, farblose Gemisch mit Hilfe eines Dünnschichtverdampfers bei einer Temperatur von 155°C und einem Druck von 0,2 mbar von überschüssigem Diisocyanat befreit. Man erhielt ein hochviskoses nahezu farbloses Uretdionpolyisocyanat mit einem Gehalt an freien NCO-Gruppen von 16 % und einem Gehalt an monomerem Isocyanat von 0,5 %.

### Herstellung eines auf Desmodur^{®} W-Uretdion-basierten Pulverlackvernetzers

107,0 g des vorstehend hergestellten Desmodur^{®} W-Uretdions, 4,5g TMP und 41,5 g Methylenchlorid wurden bei 40°C unter Stickstoff zusammen vorgelegt und gerührt bis der NCO-Gehalt auf ca. 8,5 % fiel. Danach wurde 0,3 g Katalysator und 48,0 g Cyclopentanon-2-carboxylethylester zugegeben. Nach Ende der Zugabe wurde die Reaktionsmischung 24 Stunden bei 40°C nachgerührt. Nach der Entfernung des Lösungsmittels bei 50°C unter Vakuum (1 mbar) wurde ein farbloses Pulver mit einem Gehalt an freien NCO-Gruppen von 0,6 %, einer T_{g} von 28°C und einem Schmelzbereich von 55°C bis 100°C erhalten.

### Beispiel 10

### Verwendung der Pulverlackvernetzern in pigmentierten Pulverlacken

Die Einzelkomponenten nach Tabelle 1 wurden zusammengegeben, mit einem Mischer (Prism Pilot 3 Mixer, Fa. ThermoPRISM, GB) für 30 min bei 2000 Umdrehungen pro Minute (UPM) verrührt und anschließend mit Hilfe eines Extruders (Buss PLK 46, Fa. Cooperion Buss AG, CH) bei 150 UPM, Gehäusetemperatur 100°C/120°C/150°C, homogenisiert. Nach Abkühlen wurde die erstarte, homogenisierte Schmelze gemahlen in einer Sichtermühle (ACM II, 90 µm-Sieb, Hokosawa, JP) und mit einer Becherpistole (Corona EPS der Fa. Wagner, DE) bei einer Hochspannung von 70 kV auf ein entfettetes Stahlblech aufgetragen. Die beschichteten Platten wurden dann in einem Gradient-Ofen 30 min bei Temperaturen von 140-170°C eingebrannt. Von den ausgehärteten Filmen wurden Glanz nach Gardner (20°/60°) DIN 67 530, Erichsen-Tiefung nach DIN EN ISO 1520 und Aceton-Beständigkeit (50 Doppelhübe mit einem Aceton getränkten Wattebausch; 0: keine Veränderung, 1: Film leicht ankratzbar, 2: Film weich; 1m: Film leicht matt, m: Film matt) bestimmt.

**Tabelle 1: Rezepturen von pigmentierten Pulverlacken**

| Komponente | 10-A | 10-B | 10-C | 10-D | 10-E |
|---|---|---|---|---|---|
| aus Beispiel 1 | 8,2 % | | | | |
| aus Beispiel 2 | | 8,2 % | | | |
| aus Beispiel 6 | | | 8,2 % | | |
| aus Beispiel 7 | | | | 9,0 % | |
| aus Beispiel 9 | | | | | 9,5 % |
| Rucote 194^{[1]} | 54,8 % | 54,8 % | 54,8 % | 54,0 % | 53,0 % |
| Resiflow PV 88^{[2]} | 1,0 % | 1,0 % | 1,0 % | 1,0 % | 1,5 % |
| Katalysator | 0,5 % | 0,5 % | 0,5 % | 0,5 % | 0,5 % |
| Benzoin | 0,5 % | 0,5 % | 0,5 % | 0,5 % | 0,5 % |
| Kronos 2160^{[3]} | 35,0 % | 35,0 % | 35,0 % | 35,0 % | 35,0 % |

| | | | | | |
|---|---|---|---|---|---|
| [1] Polyesterpolyol, Bayer AG, DE, OH=42-47 mg KOH/g [2] Verlaufsmittel, Worlee-Chemie GmbH, DE [3] Weisspigment, Kronos Titan GmbH, DE | | | | | |

**Tabelle 2: Lacktechnische Eigenschaften von den pigmentierten Pulverlacken**

| Parameter | 10-A | 10-B | 10-C | 10-D | 10-E |
|---|---|---|---|---|---|
| Schichtdicke [µm] | 68 - 81 | 77 - 82 | 66 - 75 | 61 - 65 | 63 - 78 |
| Glanz nach Gardner 20°/60° | | | | | |
| 30 min bei 140°C | 89 / 92 | 87 / 95 | - | - | - |
| 30 min bei 150°C | 85 / 94 | 86 / 94 | 87 / 95 | 85 / 94 | 41 / 88 |
| 30 min bei 160°C | 84 / 93 | 85 / 94 | 85 / 95 | 84 / 93 | 49 / 90 |
| 30 min bei 170°C | 83 / 93 | 82 / 93 | 84 / 94 | 84 / 94 | 56 / 91 |
| Tiefung nach Erichsen [mm] | | | | | |
| 30 min bei 140°C | 0,3 | 0,3 | - | - | - |
| 30 min bei 150°C | 0,4 | 0,3 | <1 | <1 | <1 |
| 30 min bei 160°C | 0,7 | 0,4 | >9 | >9 | <1 |
| 30 min bei 170°C | >9 | >9 | >9 | >9 | 8,5 |
| Acetonbeständigkeit | | | | | |
| 30 min bei 140°C | -7* | -7* | - | - | - |
| 30 min bei 150°C | 2 m | 2 m | -20* | -12* | -16* |
| 30 min bei 160°C | 2 m | 2 m | 1m | 2 m | 1 |
| 30 min bei 170°C | 2 m | 2 m | 1 lm | 2 lm | 1 |

| | | | | | |
|---|---|---|---|---|---|
| * Der Film nach der angegebenen Zahl der Doppelhübe abgelöst | | | | | |

### Beispiel 11

### Verwendung der Pulverlackvemetzer in Pulverklarlacken

Die Klarlackformulierungen wurden analog zu den Formulierungen aus Beispiel 10 hergestellt verarbeitet, eingebrannt und geprüft.

**Tabelle 3 Rezeptur für Pulverklarlacke**

| Komponente | |
|---|---|
| Vernetzer aus Beispiel 2 | 12,8 % |
| Rucote 194^{[4]} | 85,4 % |
| Acronal 4F^{[5]} | 1,0 % |
| Katalysator | 0,5 % |
| Benzoin | 0,3 % |

| | |
|---|---|
| [4]: Polyesterpolyol, Bayer AG, DE, OH=42-47 mg KOH/g [5]: Verlaufsmittel, BASF AG, DE | |

**Tabelle 4 Lacktechnische Eigenschaften des Pulverklarlackes**

| Schichtdicke [µm] | 65 - 78 |
|---|---|
| Glanz nach Gardner 20°/60° | |
| 30 min bei 140°C | 105 / 114 |
| 30 min bei 150°C | 103 / 112 |
| 30 min bei 160°C | 102 / 112 |
| 30 min bei 170°C | 94 / 106 |
| Tiefung nach Erichsen [mm] | |
| 30 min bei 140°C | 0,3 |
| 30 min bei 150°C | 0,3 |
| 30 min bei 160°C | > 9,0 |
| 30 min bei 170°C | > 9,0 |
| Acetonbeständigkeit | |
| 30 min bei 140°C | -12* |
| 30 min bei 150°C | 2 m |
| 30 min bei 160°C | 1 lm |
| 30 min bei 170°C | 1 lm |

| | |
|---|---|
| * Der Film nach der angegebenen Zahl der Doppelhübe abgelöst | |

### Beispiel 12

### Verwendung der Pulverlackvernetzern in Dickschicht-Anwendungen

Die Pulverlackformulierung des Beispiels 9-E wurde auf ein Keil-Blech aufgetragen und 20 Minuten bei 170°C eingebrannt. Bis zur Schichtdicke von 120µm wurden keine Blasen beobachtet.

## Patentansprüche

1. Organische Polyisocyanate, die
a) einen Schmelzbereich innerhalb des Temperaturbereiches von 40°C bis 125°C aufweisen und
b) mit einem oder mehreren CH-aziden cyclischen Ketonen der allgemeinen Formel (I) blockierte NCO-Gruppen aufweisen, 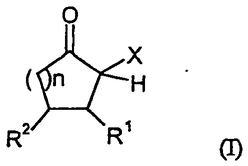 wobei in Formel (I)
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Hetero-atome der Elemente Sauerstoff, Schwefel, Stickstoff enthalten und gegebenenfalls durch Halogenatome substituiert sein können und
n eine ganze Zahl von 0 bis 5 ist.

2. Polyisocyanate nach Anspruch 1, **dadurch gekennzeichnet, dass** sie auf ggf. Uretdion-, Isocyanurat-, Iminooxadiazintrion-, Urethan-, Allophanat-, Biuret- und/oder Oxadiazintriongruppen-haltigen Polyisocyanaten mit ausschließlich aliphatisch und/oder cycloaliphatisch gebundenen Isocyanatgruppen basieren.

3. Polyisocyanate nach Anspruch 1 oder 2 **dadurch gekennzeichnet, dass** die elektronenziehende Gruppe X des CH-aziden cyclischen Ketons eine Ester-, Sulfoxid-, Sulfon-, Nitro-, Phosphonat-, Nitril-, Isonitril- oder Carbonylgruppe ist.

4. Verfahren zur Herstellung organischer Polyisocyanate nach einem der Ansprüche 1 bis 3, bei dem man
A) ein oder mehrere organische Polyisocyanate einer mittleren Isocyanatfunktionalität ≥ 1,8,
B) ein oder mehrere CH-azide cyclische Ketone der allgemeinen Formel (I), 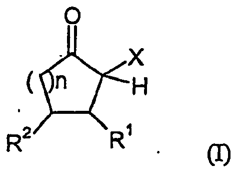 in welcher
X eine elektronenziehende Gruppe ist,
R¹, R² unabhängig voneinander ein Wasserstoffatom, ein gesättigter oder ungesättigter aliphatischer oder cycloaliphatischer, ein gegebenenfalls substituierter aromatischer oder araliphatischer Rest sein können und je bis zu 12 Kohlenstoffatome und gegebenenfalls bis zu 3 Hetero-atome der Elemente Sauerstoff, Schwefel, Stickstoff enthalten und gegebenenfalls durch Halogenatome substituiert sein können und
n ganze Zahl von 0 bis 5 ist und
C) ggf. eine oder mehrere weitere gegenüber Isocyanatgruppen reaktive Verbindungen,
D) ggf. in Gegenwart eines oder mehrerer Katalysatoren
in solchen Mengenverhältnissen miteinander umsetzt, dass das Äquivalentverhältnis von Isocyanatgruppen aus Komponente A) zur Summe der gegenüber Isocyanatgruppen reaktiven Gruppen der Komponente B) und gegebenenfalls C) 0,7 bis 1,3 entspricht.

5. Verfahren nach Anspruch 4, bei dem als Polyisocyanate A) ggf. Uretdion-, Isocyanurat-, Iminooxadiazintrion-, Urethan-, Allophanat-, Biuret- und/oder Oxadiazintriongruppen-haltigen organische Polyisocyanate mit ausschließlich aliphatisch und/oder cycloaliphatisch gebundenen Isocyanatgruppen verwendet werden.

6. Verfahren nach Anspruch 4 oder 5 **dadurch gekennzeichnet, dass** die elektronenziehende Gruppe X des CH-aziden cyclischen Ketons eine Ester-, Sulfoxid-, Sulfon-, Nitro-, Phosphonat-, Ntril-, Isonitril- oder Carbonylgruppe ist.

7. Verfahren nach einem der Ansprüche 4 - 6, bei dem als isocyanatreaktive Verbindungen C) Polyole mit einem Molekulargewicht (Mₙ) von 62 - 2000 g/mol und einer mittleren OH-Funktionalität von mindestens 2,0 verwendet werden.

8. Verwendung der Polyisocyanate nach einem der Ansprüche 1 - 3 zur Herstellung von Polyurethankunststoffen.

9. Verwendung der Polyisocyanate nach einem der Ansprüche 1-3 zur Herstellung von mit Polymethankunststoffen beschichteten Substraten.

## Claims

1. Organic polyisocyanates which
a) have a melting range within the temperature range from 40°C to 125°C and
b) have NCO groups blocked with one or more CH-acidic cyclic ketones of the general formula (I) 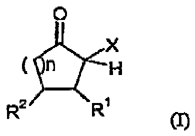 where in formula (I)
X is an electron-withdrawing group,
R¹ and R² independently of one another may be a hydrogen atom, a saturated or unsaturated aliphatic or cycloaliphatic radical or an optionally substituted aromatic or araliphatic radical and may each contain up to 12 carbon atoms and optionally up to 3 heteroatoms of the elements oxygen, sulphur and nitrogen and be optionally substituted by halogen atoms, and
n is an integer from 0 to 5.

2. Polyisocyanates according to Claims 1, **characterized in that** they are based on polyisocyanates having exclusively aliphatically and/or cycloaliphatically bonded isocyanate groups and optionally containing uretdione, isocyanurate, iminooxadiazinetrione, urethane, allophanate, biuret and/or oxadiazinetrione groups.

3. Polyisocyanates according to Claim 1 or 2, **characterized in that** the electron-withdrawing group X of the CH-acidic cyclic ketone is an ester, sulphoxide, sulphone, nitro, phosphonate, nitrile, isonitrile or carbonyl group.

4. Process for the preparation of organic polyisocyanates according to any of Claims 1 to 3, by reacting
A) one or more organic polyisocyanates with a mean isocyanate functionality of ≥ 1.8,
B) one or more CH-acidic cyclic ketones of the general formula (I) 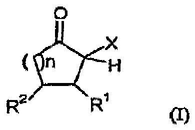 in which
X is an electron-withdrawing group,
R¹ and R² independently of one another may be a hydrogen atom, a saturated or unsaturated aliphatic or cycloaliphatic radical or an optionally substituted aromatic oraraliphatic radical and may each contain up to 12 carbon atoms and optionally up to 3 heteroatoms of the elements oxygen, sulphur and nitrogen and be optionally substituted by halogen atoms, and
n is an integer from 0 to 5, and
C) optionally one or more other compounds reactive towards isocyanate groups,
D) optionally in the presence of one or more catalysts,
with one another in proportions such that the equivalents ratio of isocyanate groups from component A) to the sum of the groups reactive towards isocyanate groups, of component B), and optionally C) is 0.7 to 1.3.

5. process according to Claim 4, where organic polyisocyanates having exclusively aliphatically and/or cycloaliphatically bonded isocyanate groups and optionally containing uretdione, isocyanurate, iminooxadiazinetrione, urethane, allophanate, biuret and/or oxadiazinetrione groups are used as polyisocyanates A).

6. Process according to Claim 4 or 5, **characterized in that** the electron-withdrawing group x of the CH-acidic cyclic ketone is an ester, sulphoxide, sulphone, nitro, phosphonate, nitrile, isonitrile or carbonyl group.

7. Process according to any of Claims 4-6, wherein polyols having a molecular weight (Mₙ) of 62-2000 g/mol and a mean OH functionality of at least 2.0 are used as isocyanate-reactive compounds C).

8. Use of the polyisocyanates according to any of Claims 1-3 for producing polyurethane plastics.

9. Use of the polyisocyanates according to any of Claims 1-3 for producing substrates coated with polyurethane plastics.

## Revendications

1. Polyisocyanates organiques, qui
a) présentent un domaine de ramollissement dans la plage de température de 40 °C à 125 °C et
b) comportent des groupes NCO bloqués avec une ou plusieurs cétones cycliques à CH acide de formule générale (I) 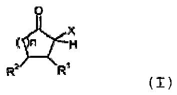 dans la formule (I)
X étant un groupe attirant les électrons,
R¹, R² pouvant être, indépendamment l'un de l'autre, un atome d'hydrogène, un radical aliphatique ou cycloaliphatique saturé ou insaturé, un radical aromatique ou araliphatique éventuellement substitué et chacun comportant jusqu'à 12 atomes de carbone et éventuellement jusqu'à 3 hétéroatomes choisis parmi les éléments oxygène, soufre, azote et pouvant éventuellement être substitué par des atomes d'halogène et
n étant un nombre entier valant de 0 à 5.

2. Polyisocyanate selon la revendication 1, **caractérisés en ce qu'**ils sont à base de polyisocyanates à groupes isocyanate en liaison exclusivement aliphatique et/ou cycloaliphatique, contenant éventuellement des groupes urétdione, isocyanurate, imino-oxadiazinetrione, uréthane, allophanate, biuret et/ou oxadiazinetrione.

3. Polyisocyanate selon la revendication 1 ou 2, **caractérisés en ce que** le groupe X attirant les électrons de la cétone cyclique à CH acide est un groupe ester, sulfoxyde, sulfone, nitro, phosphonate, nitrile, isonitrile ou carbonyle.

4. Procédé pour la préparation de polyisocyanates organiques selon l'une quelconque des revendications 1 à 3, dans lequel on fait réagir entre eux
A) un ou plusieurs polyisocyanates organiques ayant une fonctionnalité isocyanate moyenne ≥ 1,8,
B) une ou plusieurs cétones cycliques à CH acide de formule générale (I) 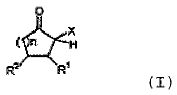 dans la formule (I)
X étant un groupe attirant les électrons,
R¹, R² pouvant être, indépendamment l'un de l'autre, un atome d'hydrogène, un radical aliphatique ou cycloaliphatique saturé ou insaturé, un radical aromatique ou araliphatique éventuellementsubstitué et chacun comportant jusqu'à 12 atomes de carbone et éventuellement jusqu'à 3 hétéroatomes choisis parmi les éléments oxygène, soufre, azote et prouvant éventuellement être substitué par des atomes d'halogène et
n étant un nombre entier valant de 0 à 5 et
C) éventuellement une ou plusieurs autres composés réactifs vis-à-vis de groupes isocyanate,
D) éventuellement en présence d'un ou plusieurs catalyseurs,
en rapports de quantités tels que le rapport d'équivalents des groupes isocyanate provenant du composant A) à la somme des groupes réactifs vis-à-vis de groupes isocyanate du composant B) et éventuellement de C) correspond à 0,7 à 1,3.

5. Procédé selon la revendication 4, dans lequel on utilise comme polyisocyanates A) des polyisocyanates organiques à groupes isocyanate en liaison exclusivement aliphatique et/ou cycloaliphatique, contenant éventuellement des groupes urétdione, isocyanurate, imino-oxadiazinetrione, uréthane, allophanate, biuret et/ou oxadiazinetrione.

6. Procédé selon la revendication 4 ou 5, **caractérisé en ce que** le groupe X attirant les électrons de la cétone cyclique à CH acide est un groupe ester, sulfoxyde, sulfone, nitro, phosphonate, nitrile, isonitrile ou carbonyle.

7. Procédé selon l'une quelconque des revendications 4 à 6, dans lequel comme composés C) réactifs avec des isocyanates on utilise des polyols ayant une masse moléculaire (Mₙ) de 62 - 2 000 g/mole et une fonctionnalité OH moyenne d'au moins 2,0.

8. Utilisation des polyisocyanates selon l'une quelconque des revendication 1 à 3, pour la production de matières plastiques polyuréthane.

9. Utilisation des polyisocyanates selon l'une quelconque des revendications 1 à 3, pour la production de substrats revêtus avec des matières plastiques polyuréthane.
